(19) Europäisches Patentamt
European Patent Office
Office européen des brevets

(11) Publication number: **0 276 155**
**A1**

(12) **EUROPEAN PATENT APPLICATION**

(21) Application number: 88300486.3

(22) Date of filing: 21.01.88

(51) Int. Cl.⁴: **B 60 C 23/02**
**G 01 L 17/00**

(30) Priority: 23.01.87 GB 8701530
04.11.87 GB 8725849

(43) Date of publication of application:
27.07.88 Bulletin 88/30

(84) Designated Contracting States:
AT BE CH DE ES FR GB GR IT LI LU NL SE

(71) Applicant: E.J. PRICE (DEVELOPMENTS) LIMITED
71 Melchett Road Birmingham Factory Centre
Kings Norton Birmingham B30 3HL (GB)

(72) Inventor: Cameron-Price, Ernest James
Regent House Pool Head Lane Wood End
Tanworth in Arden Solihull West Midlands (GB)

(74) Representative: Wallbank, Roger Wickham et al
BARKER, BRETTELL & DUNCAN 138 Hagley Road
Edgbaston Birmingham, B16 9PW (GB)

(54) Valve devices for use in measuring or controlling gas-pressure.

(57) A valve device enabling gas-pressure above a predetermined value to be readily detected comprises a valve member (31) urged by a spring (29) onto a seat (13). Pressurized gas entering by way of a restriction (7) forces the valve open and escapes by way of a whistle formation (34,35). The device may be adjustable for different pressures, and to this end the spring-loading can be varied by rotation of a tube (16) connected to the valve body (2) by a screw-formation (9). The pressure-setting is indicated by a scale (20) on the tube and an index (21) on the body. Initial adjustment can be effected in the factory by a screw (27). Subsequent access to the screw is then prevented by the application of a snap-on cap (33).

An adjustable pressure-relief valve is similar in construction but lacks the whistle-formation.

FIG.1.

**Description**

## VALVE DEVICES FOR USE IN MEASURING OR CONTROLLING GAS-PRESSURE

This invention relates to valve devices for use in measuring or controlling gas-pressure.

One application of the invention is to the provision of valve devices for use in measuring air-pressure in vehicle tyres and to valve devices enabling the air-pressure in vehicle tyres to be set to predetermined values.

When a vehicle tyre is to be inflated, the usual requirement is for it to be inflated to an extent such that the air-pressure inside the tyre has a predetermined value. This is often achieved with the aid of a pressure gauge which enables the user to determine the value of the air-pressure in the tyre. The gauge may be such as to provide the user with a continuous or substantially continuous reading of the value of the pressure, or it may be such that it can be used only intermittently, when a flexible tube through which air is supplied to the tyre has been detached from the inlet to the tyre. While information as to the value of the air-pressure in the tyre at any stage during inflation may be of some value and interest it is not absolutely necessary, and in fact it is only necessary for the user to know whether the pressure in the tyre is above or below the predetermined pressure required. Many existing types of tyre-gauges have numerical scales which must be read during the inflation process, that is during inflation itself or in the intervals between stages of inflation and/or deflation. It is often awkward or difficult to read the scales, for example when a tyre is being inflated out-of-doors at night. One aim of the present invention is to provide a valve device enabling that difficulty to be overcome or reduced.

From a first aspect the present invention consists in a valve device defining a pathway for the passage of gas, the pathway having an inlet at an upstream end and an outlet at a downstream end thereof, the device comprising a valve seat through which an intermediate part of the pathway extends, a valve member movable between a closed position, in which it engages the valve seat and thus prevents the passage of gas along the pathway, and a range of open positions, in which it is disposed downstream of its closed position and no longer prevents the passage of gas along the pathway, and spring means exerting a closing force on the valve member so as to urge the valve member in an upstream direction towards its closed position, the arrangement being such that in use, when the valve member is initially in its closed position and the pressure of gas in the pathway, upstream of the valve member, then rises above a predetermined value, the gas pressure overcomes the effect of the closing force and so causes the valve member to move from its closed position to an open position, thus giving rise to a flow of gas along the pathway, the device being characterised in that it includes signalling means operative to produce an audible signal in response to such a flow of gas.

It is desirable that the signalling means should operate to produce a clearly audible signal in response to a relatively low rate of flow of gas, so that in use when the gas pressure rises to a value just sufficient to cause the valve member to move from its closed position to an adjacent open position, and the rate of flow of gas is consequently exceedingly low, only a slight additional increase in pressure is required to cause the audible signal to be produced. Indeed, it is preferred to arrange for that additional increase in pressure to be so small in relation to said predetermined value as to be negligible.

The signalling means preferably comprises a whistle. In a preferred construction the whistle comprises a slot and a sharp edge bordering an aperture, the arrangement being such that in use gas passes through the slot and is directed across the aperture onto the sharp edge.

At least one end part of the slot is preferably tapered so as to reduce the rate of flow of gas therethrough. This construction has the advantage that it enables the whistle to operate satisfactorily at any rate of flow of gas within a relatively broad range of flow rates. In particular, if the rate of flow of gas through a central part of the slot is so great as to prevent it causing the whistle to sound satisfactorily, the rate of flow of gas through the tapered end part or tapered end parts may remain sufficiently low to cause the whistle to sound satisfactorily.

The sharp edge of the whistle is preferably of arcuate, concave shape. This construction is found to improve the operation of the whistle.

There is preferably a restriction in the passageway upstream of the signalling means such that when the signalling means is in use, the resistance to the flow of gas afforded by the restriction is greater than the resistance afforded by the signalling means. A consequence of this arrangement is that the pressure differential across the signalling means is relatively small and varies to only a relatively small extent with variations in the pressure of the gas at the inlet end of the passageway. The design of the signalling means can therefore be made relatively simple as the signalling means is required to operate in response to the application to it of gas at a pressure within only a relatively small range of pressures. Furthermore, the arrangement can be made such that when the device is used as a pressure-gauge for a vehicle tyre, only a small proportion of air is lost through the open gas valve while the tyre is being inflated.

The device may be such that said predetermined value is incapable of being varied by the user; in a preferred form of device, however, the predetermined value can be varied by the user. To this end the device preferably includes abutment means to which the spring means applies a reactive force, and adjustment means which can be adjusted to different setting positions, the arrangement being such that when the adjustment means is adjusted from one setting position to another the relative positions of the abutment means and the valve seat alter so that the closing force applied to the valve member alters and said predetermined value of gas pressure also alters.

Preferably the device includes indicating means enabling a user to adjust the adjustment means to at least two different predetermined setting positions. The indicating means may comprise a scale, with a plurality of marked divisions, and a complementary pointer which can be aligned with any selected division to indicate the setting positions required. If desired, however, there may be words or symbols corresponding to only a few pressure settings. For example there may be words or symbols indicating two setting positions, one corresponding to the pressure required for the tyres on the front wheels of a particular make and model of motor vehicle, and the other corresponding to the pressure required for the tyres on the rear wheels thereof.

Valve devices embodying the first aspect of the invention can be used in any of several different ways. Consider first a valve device in which the predetermined value of the air pressure is unalterable. The device may for example be intended for use in inflating the tyres of motor vehicles to that fixed, predetermined value. The valve device may be permanently connected to an air pump such as a foot-operated pump so as to receive air at the same or substantially the same pressure as that received by the tyre. In use a flexible outlet tube of the pump is connected to the tyre valve of a tyre in such a manner that the tyre valve is retained in an open condition. A non-return valve in the pump prevents pressurised air from the tyre re-entering the pump when the pressure in the pump is lower than the pressure in the tyre. The valve device, on the other hand, is connected to the pump on the tyre side of the non-return valve and is therefore in uninterrupted communication with the interior of the tyre. In use, when the air in the tyre is below the predetermined pressure and pumping has yet to be started, the valve device is subjected to the pressure of the air in the tyre, but that pressure is insufficient to move the valve member from its closed position to an open position. When the pump is then operated, the pressure in the outlet tube and in the device is usually raised above the predetermined value for a relatively short period during each stroke of the pump. Nevertheless, so long as the pressure in the tyre remains below the predetermined value, the valve member in the device will return to its closed position at the end of each stroke so that during a series of successive strokes of the pump the signalling means produces its audible signal only intermittently. When the pressure in the tyre rises above the predetermined value, however, the valve member in the device is retained in its open position and the signal means produces its audible signal continuously.

With that preferred arrangement the user can take as long as he (or she) wishes in inflating the tyre, without there being any continuous loss of pressurised air. In particular there is no loss of air between successive strokes of the pump. Further, if the tyre is inflated to a pressure rather greater than the predetermined value the user can leave the pump attached to the tyre until such time as the escaping air that gives rise to the audible signal has reduced the pressure to the predetermined value, whereupon the signal ceases and the escape of air ceases.

A valve device in which said predetermined value is unalterable can also to be used in another way to enable a tyre to be inflated to that predetermined pressure. In this method the device is not attached to a pump but is used as a separate entity. In carrying out the method the tyre is first inflated to a pressure above the predetermined pressure by any suitable means. The valve device is then connected to the tyre in such a manner that the tyre valve is held open. As the pressure in the tyre is above the predetermined value the valve member in the device moves to an open position and the signalling means is operative to produce its audible signal. In consequence air is gradually discharged from the tyre. When the pressure in the tyre falls to the predetermined value the valve member moves back to its closed position.

A valve device in which the predetermined value is adjustable can be used in either of the ways described above after adjustment has been effected. In particular the user can make the adjustment while the device is disposed at a distance from the tyre; at night for example the user can adjust the device indoors where it is well lit and can then readily use the device out of doors in darkness or semi-darkness.

Adjustable valve devices in accordance with the first aspect of the present invention can also be used to measure air pressure. To this end a valve device can be connected to a tyre so as to be responsive to the air pressure in the tyre and adjustment can then be effected until further slight adjustment to and fro leads to corresponding to-and-fro movement of the valve member between open and closed positions. The movement of the valve member is of course detectable by the presence or absence of the audible signal. The pressure of air in the tyre is then substantially equal to the predetermined pressure at the final position of adjustment.

The valve device preferably includes setting means which can be initially adjusted to enable the closing force exerted by the spring means to be set to a standard test value, and tamper-proof or tamper-resistant sealing means which is applied after any initial adjustment of the setting means has been effected and which thereafter makes subsequent adjustment of the setting means difficult or impossible for a user.

From a second aspect the present invention consists in a valve device defining a pathway for the passage of gas, the pathway having an inlet at an upstream end and an outlet at a downstream end thereof, the device comprising a valve seat through which an intermediate part of the pathway extends, a valve member movable between a closed position, in which it engages the valve seat and thus prevents the passage of gas along the pathway, and a range of open positions, in which it is disposed downstream of its closed position and no longer prevents the passage of gas along the pathway, spring means exerting a closing force on the valve member so as to urge the valve member in an upstream direction towards its closed position, the arrangement being such that in use, when the valve member is initially in its closed position and the pressure of gas in the pathway, upstream of the valve member, then rises above a predetermined value, the gas pressure overcomes the effect of the closing force and so causes the valve member to move from its closed position to an open position, thus giving rise to a flow of gas along the pathway, abutment means to which the spring means applies a reactive force, and adjustment means which can be adjusted to different setting positions, the arrangement being such that when the adjustment means is adjusted from one setting position to another the relative positions of the abutment means and the valve seat alter so that the closing force applied to the valve member alters and said predetermined value of gas pressure also alters, the device being characterised in that it includes indicating means enabling a user to adjust the adjustment means to at least two different predetermined setting positions.

The valve device is intended for use primarily as a pressure-relief valve. In use the adjustment means is adjusted until the indicating means indicates a desired setting position. The user then knows that if gas at a pressure greater than that indicated by the indicating means is applied to the device, the valve member will move to an open position, allowing gas to escape through the passageway.

The device may also be used to measure the pressure of gas. The device is adjusted so that the indicating means indicates a desired setting position, corresponding to a gas pressure greater than the pressure of the gas to be measured. The gas is then applied to the inlet end of the passageway and the adjustment means is gradually adjusted until the valve member just opens. The setting position indicated by the indicating means then corresponds to the pressure of the gas. The indicating means may indicate conventional pressure units such as pounds per square inch or it may indicate pressures by other criteria, such as those required for specific purposes.

The valve device may incorporate setting means and sealing means similar to those outlined above.

An embodiment of the present invention is illustrated in the accompanying drawings, in which:-

Figure 1 is a section through a valve device in accordance with the present invention, the section being along the line 1-1 of Figure 2,

Figure 2 is an elevation of the device shown in Figure 1, and

Figure 3 is a plan view of a disc constituting part of the device.

The valve device illustrated has a body 1 made as a moulding of a plastics material such as an acetal resin, for example Delrin (Registered Trade Mark). The body 1 is so shaped as to provide a disc-shaped base 2 formed with a peripheral groove which is crossed at one place by locating rib 3. An inlet tube 4 projects axially from one face of the base 2. An opening at the lower end of the inlet tube constitutes the inlet end of a passageway which extends through the device. A screw-thread is formed on the outside of the inlet tube 4, while the interior of the tube is formed with a restriction 5 which is defined by a frusto-conical surface 6 tapering from the lower end or mouth of the inlet tube to a relatively small hole 7 part way along the length of the inlet tube.

A guide tube 8 projects axially from the other face of the base 2 and is formed externally with an Acme screw-thread 9. A main cylindrical bore 10 extends axially through the guide tube and into the base 2. A cylindrical bore 11 of smaller diameter extends from that main bore to the restriction 5. An annular, planar shoulder 12 is formed where the two bores meet, and a valve seat 13 is provided at the inner edge of that shoulder.

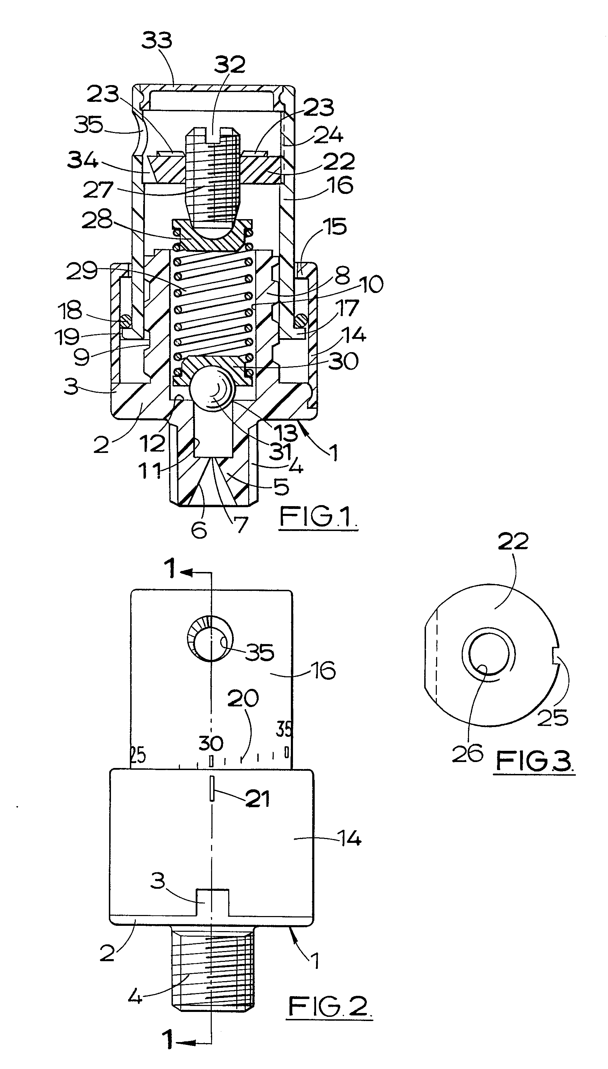

A cylindrical skirt 14 surrounds much of the guide tube 8 and is spaced radially outwards from the guide tube. One end portion of the skirt is so shaped internally as to enable it to be snapped firmly into engagement with the groove around the periphery of the base 2. As shown clearly in Figure 2, a slot in the skirt accommodates the locating rib 3 so that the skirt is in a fixed, predetermined angular relationship with the body 1. At that end remote from the base 2, the skirt 14 is provided with an inwardly directed annular flange 15. The entire inner surface of the skirt, between the base 2 and the flange 15, is formed with a plurality of narrow ribs, which for clarity are not illustrated. The ribs are parallel with the axis of the skirt and are spaced uniformly apart around the skirt.

An adjuster tube 16 extends through an annular gap between the guide tube 8 and the flange 15. A tooth (not shown) on the inner surface of the adjuster tube engages the Acme thread on the guide tube. Its shape is complementary to that of the thread so that it is accurately located in the thread. The ends of the tooth subtend an angle of about 30° at the axis of the adjuster tube. Rotation of the adjuster tube therefore causes the tube to move axially relatively to the body 1. At that end of the adjuster tube 16 nearer to the base 2 there is an outwardly directed annular flange 17. An O-ring 18 embraces the tube 16 and is trapped in the space between the flanges 15 and 17. The O-ring 18 is lightly compressed between the skirt 14 and the tube 16 so as to make it necessary for the user to exert a certain minimum torque before the tube 16 can be rotated relatively to the base. Consequently, once the position of the tube 16 has been set by the user it is unlikely to be moved inadvertantly. Furthermore, a radial tooth 19 on the flange 17 co-operates with the ribs on the inner surface of the skirt 14 and clicks when it passes each rib as relative rotation is effected. The engagement between the tooth 19 and the ribs inside the skirt 14 does not afford significant resistance to the rotation of the tube 12 relative to the skirt, but it does encourage the user to rotate the tube relatively slowly. As the width of the grooves between adjacent ribs is considerably greater than the width of each rib, and as the tip of the tooth 19 which engages the ribs is also relatively narrow, the tooth is usually located in a groove between two adjacent ribs; although it may be difficult or even impossible for the user to adjust the tube 16 to a position such that the tip of the tooth 19 actually rests on the crest of one of the ribs, this is unimportant as the tube can be adjusted to an adjacent position at only a very small angular separation from that position.

In a modified construction (not illustrated) the ribs and the projection 19 are omitted.

The presence of the flanges 15 and 17, and of the O-ring 18 between them, prevents the adjuster tube 16 being unscrewed beyond an end position and becoming freed from the body. When the adjuster tube 16 is rotated in one direction, its movement is eventually halted by the engagement of the O-ring 18 by both the flanges 15 and 17. When the adjuster tube is rotated in the other direction, its movement is eventually halted by the engagement between the flange 17 and the base 2. If it is desired to reduce the total range of rotational movement, this can be effected by fitting a rigid spacing ring of predetermined axial thickness between the flanges 15 and 17 (above or below the O-ring) or between the flange 17 and the base 2 or in both positions.

The relative rotational positions of the adjuster tube 16 and the body 1 can be set or determined by means of a scale 20 on the outside of the tube and a complementary index 21 on the skirt 14. If desired, the index may alternatively or additionally extend over the outer face of the flange 15 so as to be as close as possible to the scale 20. The index may comprise a tooth (not shown), of triangular shape in both elevation and side view, projecting upwards from the flange 15 and formed integrally with it. The arrangement is such that the adjuster tube 16 can be rotated through a total range of about 480°. End portions of the scale 20 therefore overlap each other. Alternatively the range of rotation may be restricted to about 360° so that one end of the scale is aligned with the other end thereof.

The end portion of the adjuster tube 16 further from the flange 17 is counterbored, and a disc 22 is pushed into the adjuster tube and against a shoulder formed at the end of the counterbore. Retaining ribs 23 are formed integrally with the adjuster tube 16 and project into the counterbore. During assembly the disc 22 snaps past the retaining ribs, so that the disc is permanently located in the tube at a predetermined axial position. An axially extending locating rib 24 integral with the adjuster tube also projects into the counterbore and enters a complementary slot 25 in the disc 22 (see Figure 3), so that the disc is also located against rotation relative to the tube.

An internally screw-threaded hole 26 in the disc 22 houses an adjusting screw 27. A tapered end of the screw enters a part-spherical recess in a bearer 28. A helical compression spring 29 is highly compressed between an annular flange on the bearer and a flange on a similar bearer 30. A steel ball 31 is located in the recess in the bearer 30 and also bears on the valve seat described above. The valve seat may be chamfered or otherwise shaped to provide a surface against which the ball can seal. The adjusting screw 27 is formed with a screwdriver slot 32 to enable the screw to be adjusted. The hole 26 is slightly undersize, however, so that a significant torque is required to turn the screw relative to the disc 22; the screw therefore tends to remain in a fixed position once it has been adjusted. A cap 33 is snapped firmly onto the end of the adjuster tube 16 after the screw 27 has been adjusted. It is intended that the user should not remove the cap but that if for any reason the screw were to require adjustment, the device would be returned to the manufacturer who would remove the cap 33, probably damaging it in the process, and would replace it with a new cap after re-adjustment of the screw. The screw 27 constitutes setting means which can be initially adjusted, in the factory, to enable the closing force exerted by the spring 29 to be set to a standard value. To this end, the adjuster tube 12 is rotated to a position corresponding to predetermined pressure setting as indicated by the scale 20 and index 21. Air at that indicated pressure is applied to the inlet end of the passageway, and the screw 27 is rotated until the ball 31 just lifts off its seat. The cap 33, which constitutes sealing means is then snapped into place and its presence makes subsequent adjustment of the setting means difficult or impossible for the user.

A segmental portion is omitted from the disc 22, diametrically opposite the slot 25. A slot 34 is thus formed between the disc and the adjacent wall of the adjuster tube 16. The flat face of the disc defining one side of the slot is inclined, as illustrated, so that the slot is narrower at the top than at the bottom. A whistle aperture 35 is formed in the wall of the adjuster tube 16, adjacent to the top of the slot 34; the aperture is shaped as a frustum of a non-right, inclined, circular cone, and the arrangement is such that a sharp edge of concave outline is disposed opposite to the slot 34. The slot 34 and aperture 35 together constitute a whistle formation.

The device illustrated may be used in conjunction with a foot-pump (not shown) of the kind incorporating a non-return valve and having an outlet leading to a flexible supply tube terminating in a coupling enabling the tube to be connected to a tyre valve and to retain that valve open. The tube stems from a T-junction, to which the inlet tube 4 of the device is connected.

In use, when a tyre is to be inflated to a predetermined pressure the adjuster tube 16 is rotated so that the index 21 is aligned with a value in the scale 20 equal to that predetermined pressure. This causes the spring 29 to exert predetermined force on the ball 31. If and when the pressure in the supply tube exceeds the predetermined pressure, the ball 31 is lifted off its seating and allows air to pass through the device. The rate of flow of the air is largely determined by the size of the hole 7. Air reaching the interior of the adjuster tube 16 is at a relatively low pressure and escapes through the whistle formation, causing a whistle sound to be produced. The pitch of the sound is largely determined by the volume of air between the disc 22 and the cap 33. As the slot 34 is tapered both in section (Figure 1) and in plan (Figure 3) the main flow of escaping air is directed against the sharp edge of the whistle aperture 35. With this arrangement it is found that the whistle operates satisfactorily over the required range of pressures while using relatively little air. It is intended that the scale 16 should be calibrated in pounds per square inch, and it is found that generally the whistle ceases to sound only when the pressure of the air applied to the device has fallen to within less than one pound per square inch (6.9 kN/m$^2$) in excess of the pressure indicated by the index 21 and scale 20, a pressure difference which is generally negligible. The device may be designed to operate at any pressure within the range 16 to 50 p.s.i. inclusive (110 to 345 kN/m$^2$).

During inflation of a tyre, pumping is started, and during each compression stroke the pressure in the supply tube may temporarily rise above the predetermined pressure whereupon the whistle sounds, but not until the pressure in the tyre reaches or exceeds the predetermined pressure does the whistle sound continuously. By leaving the device in place until the sound ceases again, the user knows that the pressure in the tyre has substantially the desired value.

In a modified construction (not illustrated) the scale 20 is replaced by words or symbols indicating, for example, pressure settings only for the front and rear tyres of a vehicle. Alternatively such words or symbols may be additional to the scale 20.

In a further modification the inlet tube 4 is so shaped that when it is pressed onto a valve of a vehicle tyre the valve is opened and the escape of air between the device and the valve is prevented by an annular seal mounted in the mouth of the tube. A device embodying this modification can be used for testing the pressure in a tyre or for allowing the pressure in a tyre to fall to substantially the predetermined pressure, as described above.

The valve device illustrated may be used as a pressure-relief valve, but the whistle may prove irritating in use. Accordingly the whistle formation 34,35 may be omitted and may be replaced by a simple, non-whistling air outlet.

It will be understood that a device embodying the present invention may incorporate not only one but two or more of the modifications described herein.

**Claims**

1. A valve device defining a pathway for the passage of gas, the pathway having an inlet at an upstream end and an outlet at a downstream end thereof, the device comprising a valve seat (13) through which an intermediate part of the pathway extends, a valve member (31) movable between a closed position, in which it engages the valve seat and thus prevents the passage of gas along the pathway, and a range of open positions, in which it is disposed downstream of its closed position and no longer prevents the passage of gas along the pathway, and spring means (29) exerting a closing force on the valve member so as to urge the valve member in an upstream direction towards its closed position, the arrangement being such that in use, when the valve member is initially in its closed position and the pressure of gas in the pathway, upstream of the valve member, then rises above a predetermined value, the gas pressure overcomes the effect of the closing force and so causes the valve member to move from its closed position to an open position, thus giving rise to a flow of gas along the pathway, the device being characterised in that it includes signalling means (34, 35) operative to produce an audible signal in response to such a flow of gas.

2. A valve device according to claim 1 further characterised in that the signalling means comprises a whistle (34, 35).

3. A valve device according to claim 2 further characterised in that the whistle comprises a slot (34) and a sharp edge bordering an aperture (35), the arrangement being such that in use gas passes through the slot and is directed across the aperture onto the sharp edge.

4. A valve device according to claim 3 further characterised in that at least one end part of the slot is tapered so as to reduce the rate of flow of gas therethrough.

5. A valve device according to either of claims 3 and 4 further characterised in that the sharp edge is of arcuate, concave shape.

6. A valve device according to any one of claims 1 to 5 further characterised in that there is a restriction (5) in the passageway upstream of the signalling means such that when the signalling means is in use, resistance to the flow of gas afforded by the restriction is greater than the resistance afforded by the signalling means.

7. A valve device according to any one of the preceding claims further characterised in that there is abutment means (28) to which the spring means applies a reactive force, and adjustment means (16,9) which can be adjusted to different setting positions, the arrangement being such that when the adjustment means is adjusted from one setting position to another the relative positions of the abutment means and the valve seat alter so that the closing force applied to the valve member alters and said predetermined value of gas pressure also alters.

8. A valve device according to claim 7 further characterised in that it includes indicating means (20,21) enabling a user to adjust the adjustment means to at least two different predetermined setting positions.

9. A valve device according to any of the preceding claims further characterised in that there is setting means (27) which can be initially adjusted to enable the closing force exerted by the spring means to be set to a standard test value, and tamper-proof or tamper-resistant sealing means (33) which is applied after any initial adjustment of the setting means has been effected and which thereafter makes subsequent adjustment of the setting means difficult or impossible for a user.

10. A valve device defining a pathway for the passage of gas, the pathway having an inlet at an upstream end and an outlet at a downstream end thereof, the device comprising a valve seat (13) through which an intermediate part of the pathway extends, a valve member (31) movable between a closed position, in which it engages the valve seat and thus prevents the passage of gas along the pathway, and a range of open positions, in which it is disposed downstream of its closed position and no longer prevents the passage of gas along the pathway, spring means (29) exerting a closing force on the valve member so as to urge the valve member in an upstream direction towards its closed position, the arrangement being such that in use, when the valve member is initially in its closed position and the pressure of gas in the pathway upstream of the valve member then rises above a predetermined value, the gas pressure overcomes the effect of the closing force and so causes the valve member to move from its closed position to an open position, thus giving rise to a flow of gas along the pathway, abutment means (28) to which the spring means applies a reactive force, and adjustment means (16, 9) which can be adjusted to different setting positions, the arrangement being such that when the adjustment means is adjusted from one setting position to another the relative positions of the abutment means and the valve seat alter so that the closing force applied to the valve member alters and said predetermined value of gas pressure also alters. the device being characterised in that it includes indicating means (20, 21) enabling a user to adjust the adjustment means to at least two different predetermined setting positions.

FIG.1.

FIG.2.

FIG.3.

| DOCUMENTS CONSIDERED TO BE RELEVANT | | EP 88300486.3 |
|---|---|---|

| Category | Citation of document with indication, where appropriate, of relevant passages | Relevant to claim | CLASSIFICATION OF THE APPLICATION (Int. Cl.4) |
|---|---|---|---|
| A | DE - A1 - 3 027 792 (TEFA AUTOZU-BEHÖRFABRIK GMBH)<br>   * Fig. 1; claims 1-9 *<br>-- | 1-3,7,8,10 | B 60 C 23/02<br>G 01 L 17/00 |
| A | DD - A - 147 222 (WAGNER)<br>   * Fig. 1,2; claims *<br>-- | 1-3,7,8,10 | |
| A | GB - A - 1 209 678 (JUNNOSUKE ITOH)<br>   * Page 1, lines 50-55; claim 1 *<br>-- | 1,7-10 | |
| A | US - A - 3 916 818 (BARR)<br>   * Fig. 1,2 *<br>-- | 1-3 | |
| A | US - A - 3 830 249 (FLEENOR, DWYRE)<br>   * Fig. 1,3 *<br>-- | 1-3 | TECHNICAL FIELDS SEARCHED (Int. Cl.4) |
| A | US - A - 3 929 090 (CHIANG-SHUI SU)<br>   * Fig. 2,4 *<br>---- | 1-3 | B 60 C<br>F 16 K<br>G 01 L |

The present search report has been drawn up for all claims

| Place of search | Date of completion of the search | Examiner |
|---|---|---|
| VIENNA | 13-04-1988 | WIDHALM |